Europäisches Patentamt

(19) European Patent Office

Office européen des brevets

(11) EP 0 917 134 A2

(12) **EUROPEAN PATENT APPLICATION**

(43) Date of publication:
19.05.1999 Bulletin 1999/20

(51) Int. Cl.⁶: $G11B\ 5/596$, $G11B\ 21/10$

(21) Application number: 98121193.1

(22) Date of filing: 13.11.1998

(84) Designated Contracting States:
AT BE CH CY DE DK ES FI FR GB GR IE IT LI LU
MC NL PT SE
Designated Extension States:
AL LT LV MK RO SI

(30) Priority: 18.11.1997 JP 316813/97

(71) Applicant: Hitachi, Ltd.
Chiyoda-ku, Tokyo 101 (JP)

(72) Inventors:
• Maruyama, Yohji
Iruma-shi, Saitama-ken 358-0055 (JP)
• Tomiyama, Futoshi
Hachiouji-shi, Tokyo 192-0083 (JP)
• Hamaguchi, Takehiko
Fuchu-shi, Tokyo 183-0045 (JP)
• Takano, Hisashi
Kodaira-shi, Tokyo 187-0032 (JP)

(74) Representative:
Strehl Schübel-Hopf & Partner
Maximilianstrasse 54
80538 München (DE)

(54) **Magnetic recording apparatus**

(57) There is provided a magnetic recording apparatus comprising at least a magnetic head and a positioning system for the magnetic head, which has a circuit for separately detecting a positive pulse amplitude and a negative pulse amplitude of a reproduction signal provided in an electric circuit of the magnetic recording apparatus, calculates an off-track value of the magnetic head by executing an arithmetic operation on the basis of the two kinds of amplitude values and generates a positioning signal.

FIG. 1

**Description**

BACKGROUND OF THE INVENTION

The present invention relates to a magnetic recording apparatus for use in an electronic computer, an information processor, or the like and, more particularly, to a magnetic recording apparatus which is suitable for realizing high density recording.

In a storing (recording) apparatus of an information processor, a semiconductor memory and a magnetic memory are mainly used. The semiconductor memory is used for an internal storage from the viewpoint of access time and the magnetic memory is used for an external recording apparatus from the viewpoint of a large capacity and non-volatility. At present, a magnetic disk and a magnetic tape are mainly used as the magnetic memory. In recording media used for the magnetic disk and the magnetic tape, a magnetic thin film is formed on an Al substrate or a tape made of a resin. In order to write magnetic information to the recording media, a functional part having the electromagnetic converting action is employed. In order to reproduce the magnetic information, a functional part using a magnetoresistive phenomenon, a giant magnetoresistive phenomenon, or an electromagnetic induction phenomenon is employed. Those functional parts are provided for an input/out device called a magnetic head.

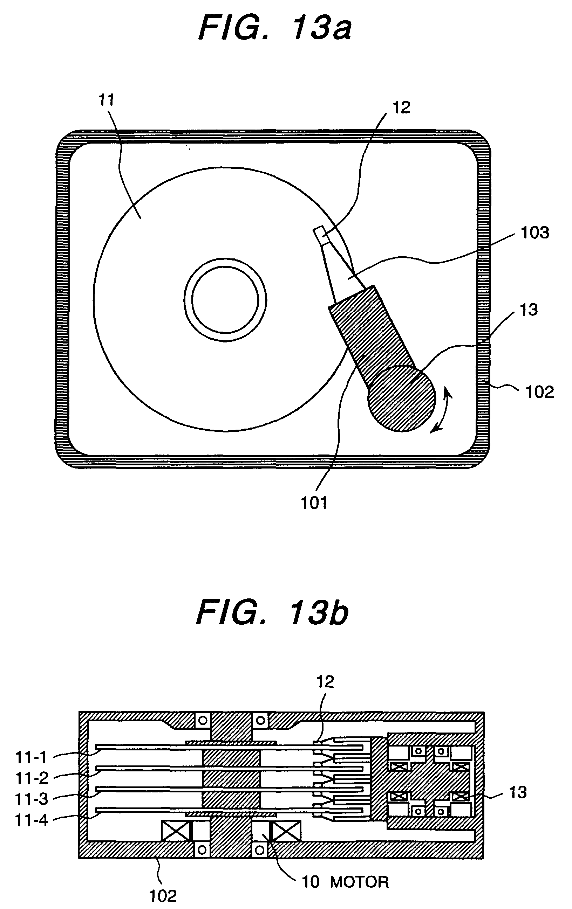

The present invention relates to a magnetic disk apparatus serving as the above magnetic recording apparatus. Figs. 13a and 13b show a fundamental construction of the apparatus. Fig. 13a is a plan view of the apparatus and Fig. 13b is a cross section. A recording medium 11 is directly connected to a motor 10 and is rotated. A magnetic head 12 moves over the surface of the recording medium. In order to realize the movement, the magnetic head 12 is supported by a rotary actuator 13 via an arm 101. A suspension 103 has the function of pressing the magnetic head 12 toward the recording medium 11 with a predetermined load. A predetermined electric circuit is necessary to process a reproduction signal and to input and output information. Those elements are attached to a casing 102.

As mentioned above, the magnetic head moves over the medium surface and is positioned at an arbitrary position, and then realizes the function of writing and reproducing magnetic information. The electric circuit for controlling the magnetic head is attached to the casing 102 together with the signal processing circuit.

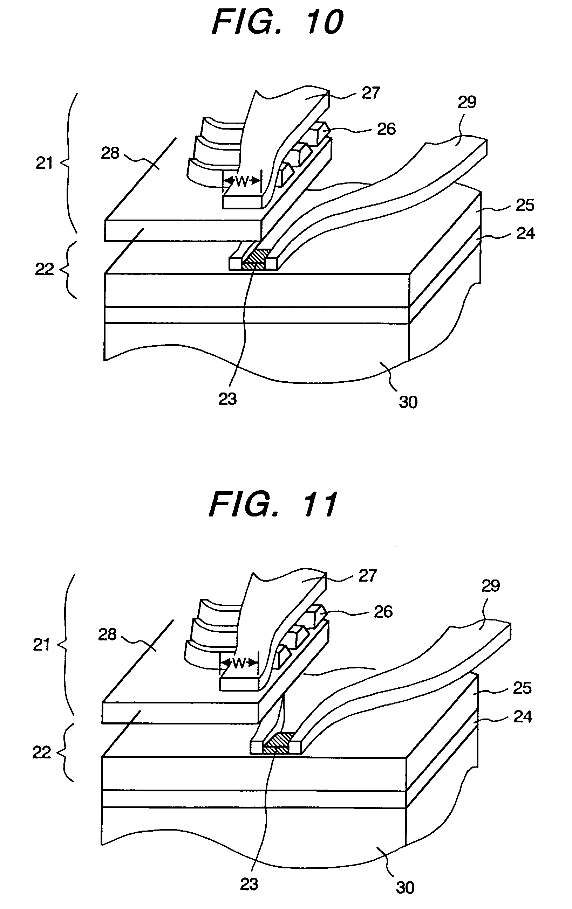

The functional part for writing and reproducing information mounted on the magnetic head (also called a slider) has, for example, the structure shown in Fig. 10. That is, the functional part is constructed by a writing part 21 and a reproducing part 22. The writing part 21 has a coil 26 and magnetic poles 27 and 28 which envelop the coil 26 from the above and below and are magnetically connected to each other. The reproducing part 22 has a magnetoresistive element 23 and an electrode 29 for flowing a constant current to the element 23 and detecting a change in resistance. The magnetoresistive element exists between a magnetic shielding layer 28 (also serves as the write magnetic pole) and a magnetic shielding layer 25 and the interval between the shielding layers determines the resolution of a reproduction signal. The functional parts are formed on the magnetic head body 30 via a base layer 24.

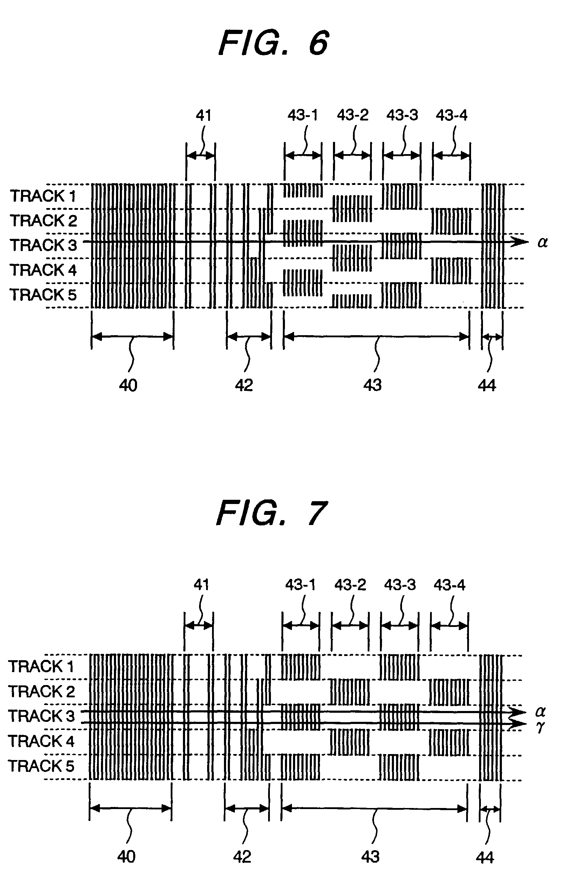

For example, Japanese Patent Application Laid-Open Nos. 7-320247 and 9-63218 disclose a system for positioning a magnetic head to an arbitrary position over a recording medium. The system uses a servo pattern as shown in Fig. 6. The pattern can be observed by thinly applying a magnetic fluid on the surface of the recording medium and using a magnetic field microscope. The servo pattern has a zone 40 for adjusting a reproduction signal output and a marker zone 41, a gray code zone 42 having information such as an address code, and a servo burst zone 43, and a code 44 indicative of the end of a servo zone. In the diagram, five information tracks are shown.

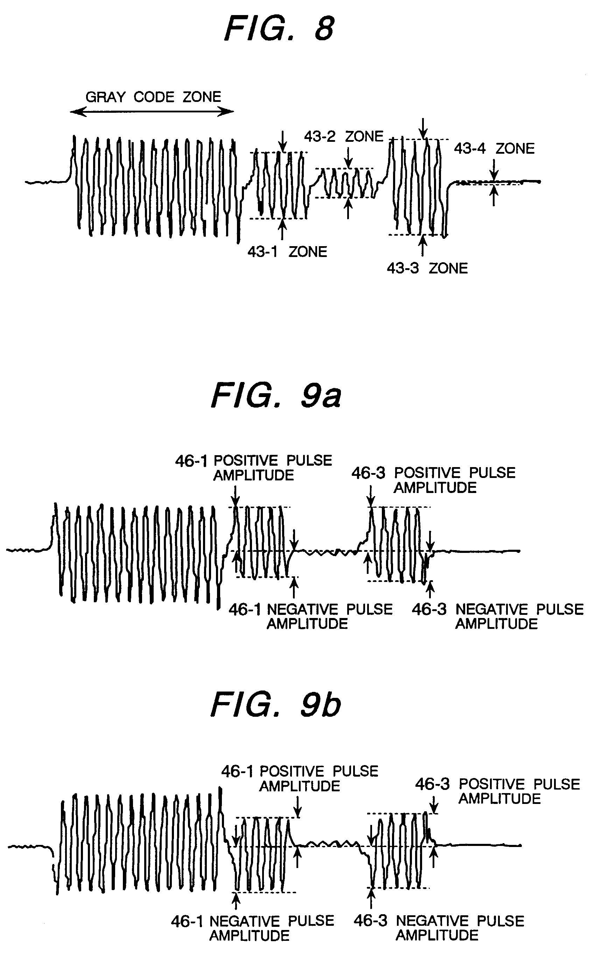

In a conventional positioning method, pattern groups 43-1, 43-2, 43-3, and 43-4 which are deviated by 1/2 or 1/n (n: real number) of the track width (or track pitch) in the servo burst zone. When it is assumed that the center of the reproduction part of the magnetic head passes over a line α (it passes closest to the center of the pattern group 43-3 and closer the pattern group 43-1 than the pattern group 43-2), a signal waveform shown in Fig. 8 is obtained. In the waveform, the amplitude depends on the distance between each pattern group and the center of the reproduction part. That is, since the pattern group 43-2 is positioned further than the pattern group 43-1 to the center of the reproduction part, the amplitude of a signal from the pattern group 43-2 is smaller. The amplitude of a signal from the pattern group 43-3 to which the reproduction part approaches the most is the largest.

In the method, four pattern groups 43-1, 43-2, 43-3, and 43-4 are necessary. This is because the servo burst pattern is deviated by 1/2 of the track pitch. The arrangement intends to obtain an effect that positional information can be obtained with a constant accuracy by arranging many patterns irrespective of the magnetic head position.

When the position of each pattern group can be known from the address code, the central position of the reproduction part can be calculated from the signal. By transmitting a control signal to the actuator so as to maintain the calculated position, the magnetic head can be positioned over a predetermined information track (held at a predetermined radial position).

Hitherto, various servo patterns are written onto the surface of a medium by an apparatus called a servo track writer upon assembly of the magnetic recording apparatus. After that, the casing is sealed in order to prevent invasion of dusts upon the apparatus, so that the servo track cannot be rewritten after shipment of the apparatus.

The performance of a storage is determined by the speed of input/output operations and a storage capacity. In order to enhance the competitiveness of a product, it is indispensable to shorten the access time and increase the capacity. In recent years, the size of the storage is being reduced in response to a request of reducing the size and weight of each information device in general. In order to satisfy the requests, a magnetic storage which can write a large amount of magnetic information to a single recording medium and reproduce the information has to be developed.

In order to satisfy the request, it is necessary to develop a new positioning method and to record a larger amount of information in both of the circumferential direction (recording direction) and the radial direction (cross-track direction) of a recording medium.

It is considered that the capacity of an information device will be further increased and a device in the 10 Gb/in$^2$ class will appear in the near future. It is considered that the density in the recording direction can be improved by developing a write magnetic pole material having a high resistivity or increasing a write frequency. As for the increase in the density in the cross-track direction, however, even if the geometrical width of the write magnetic pole or the recording part, since there is a problem in the positioning accuracy of the magnetic head, it is considered to be difficult to improve the density.

This is because that there is a problem with the accuracy of the servo pattern used for generating a positioning signal. As shown in Fig. 6, the conventional servo burst pattern 43 constructing a servo pattern has to be written in a position deviated with respect to the information track (position deviated by 1/2 or 2/3 of the track pitch).

In order to write the servo burst pattern in such a position, means for successively writing patterns in the width direction while moving the magnetic head by the 1/2 track or the 2/3 track is used. Since the successive writing process is executed while rotating the medium, there is a danger that a pattern deviation occurs. There is also a problem that a part of the pattern which has been written before is erased by a side fringing field from the end of a write magnetic pole.

For the purpose of writing the servo pattern, the recording apparatus is attached to a dedicated device called a servo track writer. The servo track writer successively writes patterns by controlling the head position of the recording device. The head position is controlled by extending an arm from the servo track writer to the recording apparatus. When the casing of the magnetic recording apparatus is closed, the servo pattern cannot be therefore written.

The life of the whole device is finished at a time when a defect occurs in the information track accompanying degradation in the head or the recording medium which constructs the magnetic recording apparatus. The problem causes high initial percent defective. In order to prevent the problem, an expensive device of over-specification has to be used.

Against the problem that a part of the pattern which has been written before is erased by the side fringing field from the magnetic head, a specific countermeasure has not been taken until now. This is because that since a conventional magnetic recording apparatus has a low density (the track pitch is wide), the existence of an erase zone does not come to exert a direct influence on the positioning accuracy.

This problem cannot be avoided for realization of a device in a 10 Gb/in$^2$ or higher class. In order to realize the 10 Gb/in$^2$ class device, it is necessary to narrow the write magnetic pole width to about 0.7 microns. Although the side fringing field from the write magnetic pole depends on the gap width between magnetic poles, it is approximately 0.2 microns. It is obviously understand that the width is equal to the length of a part where the succession of the servo burst patterns is defective. When patterns are successively written while being deviated by 1/2 track width, the length occupies about 30% of the write magnetic pole width. It will be easily understood that when the pasterns are successively written at a higher pitch, the ratio of defective zone is further increased.

It is understood that the amplitude of a signal from the servo burst pattern decreases when a part of the patterns which have been written before is erased by the side fringing field from the head. Consequently, the ratio of noise included in the signal increases and the positioning with high accuracy cannot be performed.

Hitherto, it is considered that formation of the servo pattern by the track writer has a low throughput and the device costs cannot be accordingly reduced.

SUMMARY OF THE INVENTION

It is an object of the invention to provide a magnetic storage which can write a large amount of magnetic information into a single recording medium and reproduce the information. For this purpose, it is necessary to clarify the possibility of a high density magnetic recording apparatus by disclosing a technique for increasing the density in the cross-track direction while maintaining the accuracy of a servo pattern. It is also necessary to clarify a method which can provide a high density magnetic recording apparatus at low cost by disclosing a novel servo pattern forming technique to which the above technique is applied. It is another object of the invention to provide a magnetic recording apparatus technique which can cope with deterioration in a head or a recording medium by adding a novel function which enables the user to rewrite a servo pattern.

Since the density in the cross-track direction is increased while maintaining the accuracy of the servo pattern, the following means is first used in the invention.

As fundamental functions, a magnetic recording apparatus is provided with a magnetic head having means for writing and reproducing information to/from a magnetic recording medium and a positioning system for the magnetic head. The apparatus is newly provided with a function of generating a positioning signal from a difference, a sum, or a ratio of a pulse amplitude on the positive side (hereinbelow, called a positive pulse amplitude) of a reproduction signal and a pulse amplitude on the negative side (hereinbelow, called a negative pulse amplitude) as a means for positioning the magnetic head to a predetermined position when information is outputted/inputted.

Specifically, when the positive pulse amplitude of the reproduction signal is set to Vp, the negative pulse amplitude is set to Vm, and the off-track value of the magnetic head is set to Ph, the following relation

$$Ph \propto Vp\text{-}Vm$$

or

$$Ph \propto Vp/Vm$$

or

$$Ph \propto (Vp\text{-}Vm)/(Vp\text{+}Vm)$$

is satisfied.

A giant magnetoresistive element is used as means for reproducing the magnetic head.

A tunneling magnetoresistive element is used as means for reproducing the magnetic head.

A dual magnetoresistive element constructed by at least two functional films is used as means for reproducing the magnetic head.

In order to generate the positioning signal from the difference between the positive and negative pulse amplitudes of the reproduction signal, the center of the width of a servo pattern and the center of the width of a data pattern are positioned on tracks on the same circumference.

A fluctuation of the center position of the servo pattern existing in the same information track is within 10% of an information track pitch.

From the effect, the zone of the servo pattern can be narrowed and a recording apparatus in which the ratio of a data zone is increased to 95% or higher is realized.

In order to generate a positioning signal from the difference between the positive pulse amplitude and the negative pulse amplitude of a reproduction signal, two peak hold circuits for processing the positive pulse signal and the negative pulse signal included in the reproduction signal from the magnetic head, respectively, and a subtracter, an adder, and a divider for calculating outputs from the two peak hold circuits are provided in the magnetic recording apparatus.

In order to realize the above, data is written to the recording medium on the basis of information obtained by multiplexing a servo signal onto a data signal.

Further, there is provided a function of extracting a servo signal having an arbitrary frequency from the reproduced signal and calculating the position information from a difference between a positive pulse amplitude and a negative pulse amplitude of the servo signal.

In this case, frequencies of servo signals extracted from the reproduction signals are made different in neighboring information tracks.

A band-pass filter is used to extract the servo signal from the reproduced signal.

The difference between the frequencies of the servo signals from the neighboring information tracks is wider than the band width of the band-pass filter.

The center frequency of the band-pass filter is made variable.

As a means for correcting the difference between the positive pulse amplitude and the negative pulse amplitude occurring in an output signal of the data zone, an amplifier for correcting the positive pulse amplitude and the negative pulse amplitude, respectively, on the basis of the output of the comparator is provided in the magnetic recording apparatus.

A circuit for decoding the signal of the data zone is provided at the post stage of the amplifier.

For the purpose of providing a high density magnetic recording apparatus at low cost, a servo signal for positioning is allowed to be generated by the user or the apparatus itself upon manufacture of the magnetic recording apparatus.

There is provided a function of extracting the servo signal from existing tracks on the same face of the recording medium, calculating the position of the magnetic head from the difference between the positive pulse amplitude and the negative pulse amplitude included in the servo signal, moving and holding the magnetic head to a target position on the basis of the information, and writing a servo pattern.

The process has to be carried out in a state where at least one recording track serving as a reference has been preliminarily written. A conventional servo track writer can be used for writing the reference track. Since the writing zone is narrow, an influence exerted by the writing operation on the throughput is extremely small.

In order to realize the function, the center of a reproduction track is apart from the center of a write track by the half or more of the width of the write track with respect to the positional relation between a functional element constructing the means for reproducing the servo signal and a functional element constructing the means for recording the servo signal.

In this case, a giant magnetoresistive element is used as means for reproducing the magnetic head.

As another reproducing means, a tunneling magnetoresistive element is used.

As another reproducing means, a dual magnetoresistive element constructed by at least two functional films is used.

In order to realize the positioning method, the center of the width of a servo pattern and the center of the width of a data pattern are positioned on tracks on the same circumference.

In order to separately process the positive pulse signal and the negative pulse signal included in the reproduction signal from the magnetic head, two peak hold circuits and a comparator for detecting the difference between outputs from the two peak hold circuits are provided in the magnetic recording apparatus.

The deviation amount of the central position of the servo pattern existing in the same information tracks is set within 10% of the information track pitch.

At least two peak hold circuits for separately processing the positive pulse signal and the negative pulse signal included in the reproduction signal from the magnetic head and a comparator for detecting a difference between outputs form the two peak hold circuit are provided.

Even if a plurality of the reference tracks for positioning exist, it is within a range in which a target recording density can be realized so that there is no problem. By dispersing the plurality of reference tracks in the radial direction of the recording medium, a positional error which occurs when the information track is self-generated can be corrected in the middle. From the effect, an information track with higher density can be self-generated. There is an optimum number of reference tracks obtained from conditions such as head, positioning system, medium, and the like.

In order to allow the information track to be generated also after shipment of the magnetic recording apparatus when the head, recording medium, or the like deteriorates, a function of formatting the information track by using the reference track for positioning as a starting point by a signal sent through an interface circuit of the magnetic recording apparatus is provided.

There is also provided a function of executing a process for detecting and registering the position of a defect in the medium interlockingly with the formatting process.

There is also provided a function of arbitrary changing a track pitch in order to avoid a defect or the like.

BRIEF DESCRIPTION OF THE DRAWINGS

Fig. 1 is a block diagram showing a magnetic recording apparatus having two peak hold circuits of the present invention;

Fig. 2 is a Block diagram showing the circuit construction of a conventional magnetic recording apparatus;

Fig. 3 is a chart showing the experiment result for explaining the principle of the invention;

Fig. 4 is a diagram showing an example of a sensitivity distribution of a giant magnetoresistive element;

Figs. 5a to 5e are diagrams for explaining the reason why the positive and negative pulse amplitudes change in an offset state in the giant magnetoresistive element.

Fig. 6 is a diagram showing conventional servo patterns;

Fig. 7 is a d iagram showing servo patterns of the invention;

Fig. 8 is a diagram showing a reproduction signal from the conventional servo patterns;

Figs. 9a and 9b are diagrams showing a reproduction signal from the servo patterns of the invention;

Fig. 10 a constructional diagram showing a magnetic head element;

Fig. 11 is a constructional diagram showing a conventional magnetic head element of the invention.

Fig. 12a to 12c are diagrams showing a method of self-generating servo patterns of the invention;

Figs. 13a and 13b are diagrams showing the fundamental construction of a conventional magnetic recording apparatus and a magnetic recording apparatus of the invention.

DETAILED DESCRIPTION OF THE PREFERRED EMBODIMENTS

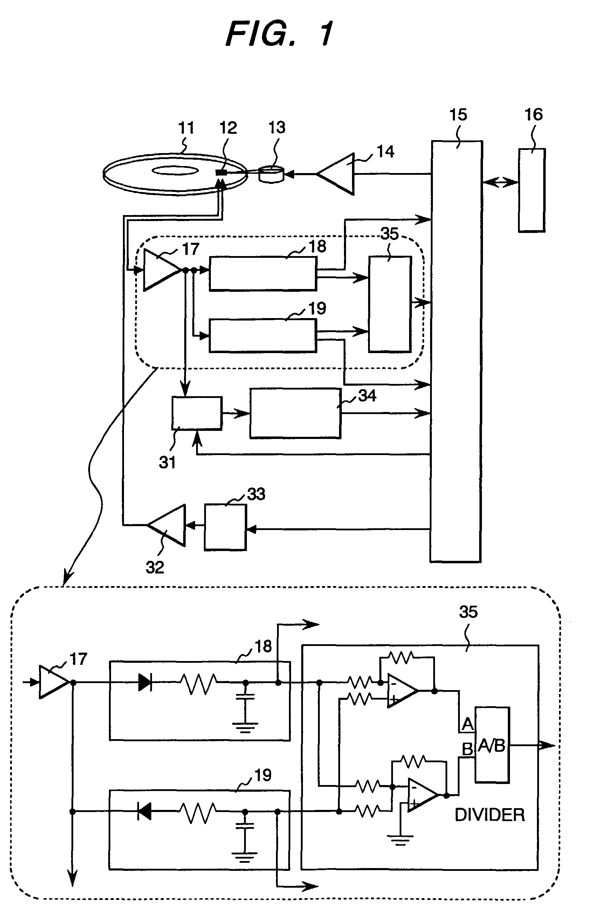

A first embodiment of the invention will be described with reference to Fig. 1. Fig. 1 shows a conceptual diagram showing an electric circuit construction of a magnetic recording apparatus. Magnetic information is written in the recording medium 11. The magnetic head 12 has the function of converting the magnetic information from the recording medium to an electric signal. The magnetic head 12 is moved by the rotary actuator 13 and the position of the magnetic head 12 is held. A control current is flowed from a driver 14 for positioning to the rotary actuator 13. The driver 14 for positioning is driven by a signal from a magnetic disk controller 15.

In the magnetic disk controller 15, information from an external apparatus 16 is processed and arithmetic operations and the like are executed. The arithmetic operation includes at least the function of calculating the position of the magnetic head on the basis of a signal from the servo pattern, obtaining the difference between the position and a target position, and calculating a distance (the angle of rotation of the rotary actuator) for moving the magnetic head from the difference.

The electric signal generated by using the servo pattern is sent from the magnetic head 12 to two peak hold circuits 18 and 19 via an automatic amplification controller 17 called an AGC.

Each of the circuits 18 and 19 comprises at least a resistor, a capacitor, and a diode as shown in the lower part of Fig. 1. The difference between the two peak hold circuits 18 and 19 is that the directions of the diodes are different. Because of the difference, a positive pulse signal and a negative pulse signal are separated. The resistor and the capacitor integrate signals which have passed the diode in a predetermined time and detect the amplitude (peak) of the signal. The starting point of the integration is controlled by a signal from the magnetic disk controller 15. Since the specific method is similar to that of the conventional technique, its description is omitted here. Although it is similarly necessary to reset charges accumulated in the capacitor, the method is also similar to that of the conventional technique so that the description is omitted here.

Similar functions can be also obtained by employing a peak hold circuit using an operational amplifier. In the embodiment, the circuit having only the resistor and the capacitor is employed since the operation is simple and the circuit is constructed at low cost.

As mentioned above, the peak hold circuits have the function of separately detecting the positive and negative pulse amplitudes included in a signal from the servo pattern. The detected amplitude information is sent to a computing unit 35 at the post stage where the calculation of subtraction, addition, or comparison is executed to the positive and negative pulse amplitudes. An output from the computing unit 35 is sent to the magnetic disk controller 15. The movement amount of the magnetic head is calculated from the signal.

In the embodiment, the following arithmetic operation is executed by the computing unit 35. When it is assumed that the off-track value is set to Ph, it is obtained as follows by using a positive pulse amplitude Vp and a negative pulse amplitude Vm of a reproduction signal.

$$Ph \propto (Vp - Vm)/(Vp + Vm) \qquad (1)$$

The expression coincides with an expression for obtaining the asymmetry of the positive and negative pulse amplitudes. For executing the operation, the computing unit 35 comprises at least two operational amplifiers, resistors, dividers, and the like as shown in the lower part of the diagram. A person skilled in the art can easily understand that the upper operational amplifier has the function of obtaining the sum of two signals and the lower operational amplifier has the function of obtaining the difference between two signals.

By preliminarily learning the characteristics of the magnetic head which will be described hereinlater, the off-track value can be obtained from the expression (1) calculated by the computing unit 35.

Similar position information can be also obtained from the ratio of the positive and negative pulse amplitudes of a reproduction signal. In this case, only a divider is used in the computing unit 35. That is, when the off-track value is set to Ph, it is calculated as follows by using the positive pulse amplitude Vp and the negative pulse amplitude Vm of a reproduction signal.

$$Ph \propto Vp/Vm \qquad (2)$$

Similarly, the position information can be also obtained from the difference between the positive pulse amplitude and the negative pulse amplitude of a reproduction signal. In this case, only a subtracter is used in the computing unit 35. That is, when the off-track value is set to Ph, it is calculated as follows by using the positive pulse amplitude Vp and the negative pulse amplitude Vm of the reproduction signal.

$$Ph \propto Vp - Vm \qquad (3)$$

In order to calculate the position information from the positive pulse amplitude and the negative pulse amplitude of the reproduction signal from the servo pattern, in the embodiment, a giant magnetoresistive element is used as reproduction means of the magnetic head. According to our examination, it was confirmed that a tunneling magnetoresistive element and a dual magnetoresistive element comprising at least two functional films are reproduction means have similar functions. A case where either one of the elements is employed as the reproduction part of the magnetic head can be applied to the invention by the reason which will be described hereinlater.

The other circuit construction will be described with reference to Fig. 1. The output of the AGC 17 is also sent to an active amplifier 31. An output of the active amplifier 31 is sent to a signal process circuit 34 and is sent to the magnetic disk controller 15. The active amplifier 31 has the function of amplifying the positive and negative pulse amplitudes of the reproduction signal with respective gains on the basis of information from the magnetic disk controller 15.

The information from the magnetic disk controller 15 is used as means for correcting the difference between the positive pulse amplitude and the negative pulse amplitude. Consequently, the gains of the positive and negative pulse amplitudes are adjusted by the active amplifier 31 on the basis of the output of the computing unit and the adjusted amplitudes are sent to the post stage, thereby making the positive and negative pulse amplitudes to be almost equal.

Information to be recorded in the signal from the magnetic disk controller 15 is transmitted via a write precompensation and precoding circuit 33 and a write driver 32 to the magnetic head. The construction of a part related to the writing operation is similar to that in the conventional magnetic recording apparatus.

In order to use means for multiplexing a servo signal on a write signal, it is sufficient to obtain the sum of a data signal and a servo signal in the magnetic disk controller 15. This can be achieved by an existing adder.

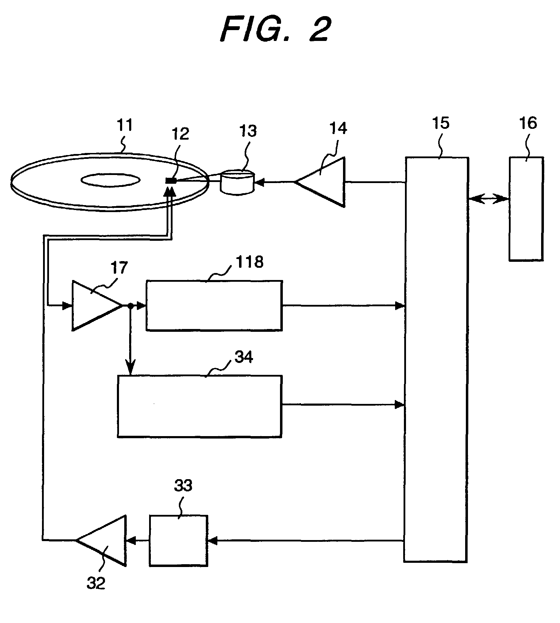

Fig. 2 shows a circuit construction of a conventional magnetic recording apparatus. According to the construction, the existence of the recording medium 11, magnetic head 12, rotary actuator 13, positioning driver 14, magnetic disk controller 15, write precompensation and precoding circuit 33, and write driver 32 is the same as Fig. 1. The different points are that there is one peak hold circuit 118 and that the active amplifier 31 does not exist at the front stage of the signal processing circuit. The reason why only one peak hold circuit 118 is used is that the positive and negative pulse amplitudes of the reproduction signal are processed without being discriminated. The process has been already described with reference to Fig. 8. Since the positive and negative pulse amplitudes are processed without being discriminated, it is naturally unnecessary to provide the active amplifier 31 at the front stage of the signal processing circuit.

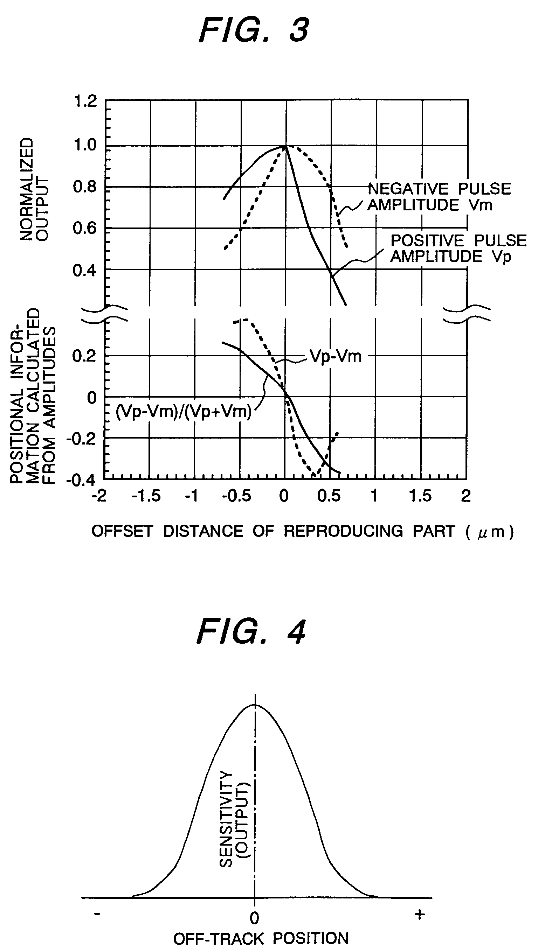

The principle of detecting the position information with the circuit construction (Fig. 1) of the invention will now be described. Fig. 3 shows the result (in which polarities are omitted and only amplitude values are shown) of measurement of changes in the positive pulse amplitude Vp and the negative pulse amplitude Vm of a signal detected when the magnetic head using the giant magnetoresistive element as a reproduction part is moved (offset) in the track width direction from the center of the information track. From the chart, it is understood that the positive pulse amplitude becomes larger than the negative pulse amplitude on the negative offset side. On the contrary, it is understood that negative pulse amplitude becomes larger than the positive pulse amplitude on the positive offset side.

When (Vp - Vm)/(Vp + Vm) is calculated, the result is as shown in the lower part of Fig. 3. It is understood from the chart that the value monotonously increases and decreases with respect to the offset. It was confirmed from experiments that the increase and decrease are almost constant. By preliminarily learning the characteristic diagram, therefore, the offset, that is, the positional relation between the magnetic head and the track center can be obtained.

A similar characteristic curve can be also obtained by calculating (Vp - Vm). The result is also shown by a broken line in Fig. 3. In this case, it is understood that the value decreases monotonously in a rather narrow range with respect to the offset amount. A positioning operation similar to the above can be therefore realized in a rather narrow range with respect to the positional deviation amount of the magnetic head.

It was also confirmed that the result of Vp/Vm also monotonously changes with respect to the offset (off-track distance) (the result is not shown in Fig. 3). In this case as well, the positioning operation similar to the above can be realized.

Although the phenomenon of occurrence of a difference between the positive and negative pulse amplitudes by the offset of the magnetic head is also seen in a magnetoresistive element, the change in the amplitude is smaller than the result of Fig. 3 and the magnetoresistive element cannot be applied for positioning. However, it became clear that the change in amplitude is conspicuous in a peculiar magnetizing state (which will be described hereinlater) represented by the giant magnetoresistive element.

The giant magnetoresistive element used in the embodiment is constructed by sequentially depositing a base film (Hf: 5 nm), an antiferromagnetic film (Fe-Mn; 10 nm), a magnetic film (first ferromagnetic film: NiFe alloy film: 6 nm), a non-magnetic film (Cu: 3nm), a soft magnetic film (second ferromagnetic film: NiFe alloy film: 6nm) having the function of a free magnetizing direction layer, and a protective film (Hf: 5 nm).

The construction has the construction of a spin valve element structure which is a kind of the giant magnetoresistive element in a wide sense. It was confirmed that a difference occurs between the positive and negative pulse amplitudes by an offset of the magnetic head as long as the spin valve element construction is used.

A value which can be obtained from the positive and negative pulse amplitudes is equal to an output of the comparator 35 shown in Fig. 1. From the output, the positional relation between the single information track and the magnetic head can be led. The position information similar to the amplitude difference obtained from the signal from the servo burst patterns which are deviated by the 1/2 or 2/3 of the track width is derived. The information track position to which the magnetic head comes closest is read from the gray code zone and the detailed position information is calculated from the ratio of the positive pulse amplitude to the negative pulse amplitude, thereby enabling the magnetic head to be positioned in a manner similar to the conventional positioning.

The reason why the novel positioning method is advantageous to record information in the cross-track direction will be described. According to the method, a change occurs in the positive and negative pulse amplitudes when the reproduction part left from the center of the information track. The servo burst pattern can be therefore arranged on the information tracks. Such a state is shown in Fig. 7. In Fig. 7, five servo tracks are shown.

In a manner similar to the conventional servo patterns, the servo patterns have a signal gain control zone 40, a marker zone 41, a gray code zone 42 having information such as address code, and a code 44 indicative of the end of the servo zone. The center of a servo burst pattern group 43 coincides with the center of the track. The neighboring servo burst patterns are alternately arranged. The arrangement has the effect of preventing an erroneous operation for reading the next servo burst pattern when an off-track amount is large.

When it is assumed that the center of the reproduction part of the magnetic head passes over the line $\beta$, reproduction signals (46-1, 46-3) as shown in Fig.9a are obtained from burst pattern groups 43-1 and 43-3. When it is assumed that the center of the reproduction part of the magnetic head passes over the line $\gamma$, reproduction signals (46-1 and 46-3) shown in Fig. 9b are obtained from the burst pattern groups 43-1 and 43-3. The lines $\square$ and $\gamma$ are positioned apart from each other toward the opposite ends from the center of the information track and are "off-tracked" in the opposite directions. In such a case, as it is clear from the measurement result shown in Fig. 3, it is understood that the positive pulse amplitude and the negative pulse amplitude of a signal are different and the magnitudes of the amplitudes are reversed.

In the example shown in Figs.9a and 9b, the example using two burst pattern groups has been described. As will be obviously understood from the diagram, almost equal signals are obtained from the two burst patterns. One burst pattern can be therefore used instead of using the two burst patterns. The servo zone can be narrowed from this effect. Specifically, the ratio of the servo zone to the other zone can be reduced to 5% or smaller. According to the conventional technique, in the servo zone, 30 bits are necessary for a reproduction signal gain control zone, likewise, 12 bits for the gray pattern (gray zone), 4 bits for a servo mark (marker zone), 32 bits for the burst pattern, and 2 bits for the end mark are necessary. 32 bits of the burst pattern, however, can be shortened up to 8 bits. From the effect, the servo zone can be set to 5% or smaller and the data zone can be set to 95% or larger.

A signal of a low frequency equal to the burst pattern can be also multiplexed on the data signal. Extraction of the servo signal having the low frequency can be realized by a band-pass filter. In the process, however, there is the possibility that a servo signal from the neighboring track is erroneously reproduced in a state of off-track. In order to prevent this, the frequency of the servo signal extracted from the reproduction signal is made different from that in the neighboring information track. For the purpose of reproducing the signals distinctively, the difference between the frequencies of the servo signals from the neighboring information tracks is made wider than the band width of the band-pass filter or the central frequency of the band-pass filter is made variable. Those circuit can be realized by inserting the above band-pass filter to the post stage of the AGC 17 shown in Fig. 1. The band-pass filter changes the central frequency by the signal from the magnetic disk controller 15. Those functions can be easily realized by applying the existing electric circuit technique.

In the magnetic recording apparatus of the invention, since the difference between the positive pulse amplitude and the negative pulse amplitude with respect to the offset of the magnetic head is preliminarily learned, it is a base that the position information can be generated from the result. The important point of the function is that the position information can be detected in a state where the center of the servo burst pattern coincides with the center of the information track (the center in the width direction of the servo pattern and the center of the width of the data pattern are positioned on the same circumference. A deviation of the central position of the servo patterns existing on tracks on the same circumference is within 10 percent of the track pitch since the servo patterns do not have to be successively written. Consequently, a conventional problem in which a part of the patterns is erased at the time of the successive writing process does not occur. Even if the track pitch is narrowed, therefore, a signal from the servo burst pattern does not deteriorate. From the effect, the positioning control for the high density magnetic recording apparatus can be carried out.

A signal suitable for generating the positioning signal is obtained from any of the giant magnetoresistive element, the tunneling magnetoresistive element, and the dual magnetoresistive element constructed by at least two functional films. Each of the elements has a soft magnetic film whose magnetization state changes by the magnetic field from the recording medium. Further, different from a simple magnetoresistive element (the magnetization is obliquely oriented at 45 degrees), the magnetization of the soft magnetic layer is oriented in the track width direction. In such an element, as shown in Fig. 4, the sensitivity distribution is of a Gaussian type in which the center of the track is a symmetry axis. The sensitivity distribution is obtained from the sum of the positive and negative pulse amplitudes. Consequently, although the off-track state can be detected from the sum of the positive and negative pulse amplitudes, the off-track direction cannot be known.

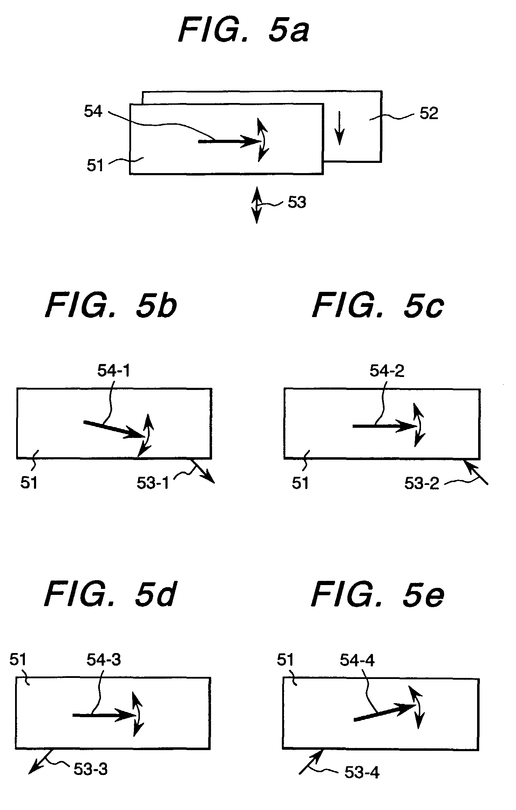

In the off-track state, however, a change occurs in the ratio of the positive and negative pulse amplitudes. The principle is considered as follows at present. Description will be given with reference to Figs. 5a to 5e. Figs.5a to 5e are conceptual diagrams of a spin valve type element as a giant magnetoresistive element. A change in resistance of a film occurs in such a manner that a magnetic field 53 acts as shown by Fig.5a, a magnetization 54 of a soft magnetic rotatable magnetization layer 51 turns, and the angle between the magnetization and the magnetization direction of a spin driving layer 52 changes.

When the head moves over the element toward the left of the paper from the center of the information track, the magnetic field generates from the end of the information track. That is, a magnetic field 53-1 shown in Fig.b or 53-2 shown in Fig.5c is applied. Whether the magnetic field 53-1 or 53-2 is applied depends on the polarity of the magnetic domain and the magnetic field is repeatedly applied. When the movements of the magnetization 54-1 and 54-2 by the magnetic fields 53-1 and 53-2 are examined, it is considered that the rotation of the magnetization 54-1 whose in-plane magnetic field component is the same is larger than that of the magnetization 54-2. For rotating the magnetization 54-2 in the in-plane direction same as the magnetic field 53-2, it is necessary to overcome an exchange energy acting between the magnetization 54-2 and the magnetization which does not rotate, the angle of rotation is regulated. Consequently, it can be explained that a signal obtained by the magnetic field 53-1 is larger than a signal obtained by the magnetic field 53-2.

When the magnetic head is offset in the opposite direction, magnetic fields 53-3 and 53-4 shown in Fig.5d and Fig.5e are applied at the end of the element on the opposite side. In this case, the direction of the magnetic field 53-4 is similar to that of the magnetization 54-4, the magnetization easily rotates.

The above will be summarized. When the magnetic head is offset to the right side, the signal amplitude by the downward magnetic field 53-1 becomes large. When it is offset to the left side, the signal amplitude by the upward magnetic field 53-4 becomes large. The relation coincides with the measurement result of Fig. 3.

In any of the tunneling magnetoresistive element and the dual magnetoresistive element constructed by at least two functional films, since the magnetization of the soft magnetic layer for detecting the magnetic field is oriented in the track width direction, when the magnetic head is moved from the center of the information track, a change occurs in the amplitudes on both of the positive and negative sides by the same effect as above. By detecting the phenomenon by the method as mentioned above, the invention can be applied.

However, the characteristic is not suitable for reproducing the recorded information since the recorded information corresponds to signals of both of the positive and negative pulse amplitudes in the magnetic recording apparatus. When the signal amplitude of one side is reduced by approximately 20%, it causes an erroneous operation. In order to prevent the erroneous operation, the magnetic head positioning accuracy has to be increased extremely.

This countermeasure is, however, not preferable since it causes an increase in the price of the device. According to the invention, therefore, a technique for realizing a high quality signal processing even in a state where the positioning accuracy is not increased extremely (in a state where there is a difference between the positive pulse amplitude and the negative pulse amplitude) was developed.

The technique uses the fact that the difference between the positive and negative pulse amplitudes is known from the difference between the signal amplitudes from the servo burst patterns. Since the difference in neighboring data patterns can be considered to be almost constant, the amplification factor of the positive and negative pulse amplitudes is changed by using the value, thereby enabling the amplitude to be equal to the amplitude in an almost "on-track" state at the post stage. In order to realize it, in the invention, the amplifier 31 for correcting the positive and negative pulse amplitudes on the basis of the output of the comparator 35 shown in Fig. 1 is provided in the magnetic recording apparatus and the signal processing system 34 is arranged at the post stage.

A second embodiment using the invention will now be described. As one of means for providing the high density magnetic recording apparatus at low cost, there is a method in which a servo track writer by which the productivity deteriorates is not used. In order to realize the method, it is necessary to generate a servo pattern by the magnetic recording apparatus itself.

This method is also described in Japanese Patent Application (JP-A) Nos. 8-212733 and 8-212527. In the method of JP-A-8-212733, the difference between the positive and negative pulse amplitudes is not considered. Consequently, means for increasing the gain of a positioning loop for the purpose of maintaining the stability against a mechanical external disturbance is required. According to our additional examination, it is necessary to separately prepare a circuit for forming the servo pattern.

According to the method of JP-A-8-212527, it was found that a mechanical fluctuation in an arm or the like exerts an influence (degradation in positioning accuracy) on the positional accuracy since positional information from another medium surface has to be also fetched.

In contrast to the conventional technique, a special magnetic head shown in Fig. 11 is used in the present invention. The magnetic head has the construction such that the track center of a reproduction part 23 is apart from the track center of a write magnetic pole 27 by the half of the track width or more (when this magnetic head is compared with the conventional magnetic head shown in Fig. 10, it is understood that the reproduction part is deviated to the right side).

The meaning of the half of the track width is as follows. An overlap amount of the reproduction part and the neighboring track used for generating the positioning signal when the magnetic head is off-tracked increases. When the overlap amount increases, as obviously understood from the characteristics shown in Fig. 3, the signal amplitude changes in a state where the linearity is kept the most and a highly accurate positioning signal can be obtained. It does not correspond to the offset for the yaw angle seen in the conventional head. Consequently, in order to execute the invention strictly, it is necessary to calculate a deviation between the reproduction part and the write zone, in consideration of the linearity of the head output change and the yaw angle. The calculation is easily understood by a person skilled in the art.

In this construction as well, similarly, the giant magnetoresistive element, tunneling magnetoresistive element, or the dual magnetoresistive element constructed by at least two functional thin films is used as a reproducing means.

In the embodiment as well, the center of the width of the servo pattern coincides with the center of the width of the data pattern. With the construction, the process for successively writing the servo burst pasterns is made unnecessary.

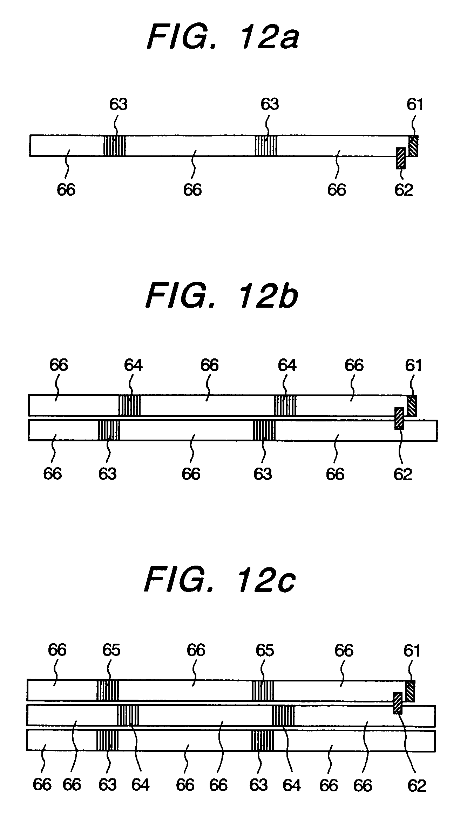

Figs.12a to 12c show a method of self-generating servo patterns. Fig.12a shows a state where one servo pattern 63 (at least, the servo burst pattern is included) is written on the innermost or outermost circumference. Obviously, the center of a write head 61 and the center of the servo pattern 63 coincide with each other. When the track center of the reproduction part is away from the track center of the write zone by the half of the track width, the center of the reproduction part 62 is deviated by about 1/2 of the width of the servo pattern. As shown in 12b, a neighboring servo pattern 64 is written. For the positioning in this case, position information from the servo pattern 63 which has been written first is used. According to the method of obtaining the position information from the difference between the positive and negative pulse amplitudes of the invention, as understood from the result of Fig. 3, a large change occurs in the ratio of the positive and negative pulse amplitudes in response to a slight positional deviation. Since the center of the reproduction part 62 is away from the center of the write zone 61 by the half of the track width, a high accuracy positioning signal can be obtained.

This process is repeated and a new servo pattern 65 is written as shown in Fig.12c, servo patterns can be formed on the entire face of the magnetic recording medium. It will be easily understood that, in order to realize the process, it is necessary to have two peak hold circuits for respectively processing positive pulse signal and a negative pulse signal included in a reproduction signal from the magnetic head and a comparator for detecting the difference between outputs of the two peak hold circuits within the magnetic recording apparatus.

In order to execute the process, at least one reference track for positioning has to be provided on the face of a recording medium. A servo track writer can be used for positioning the reference track or, simply, the rotation of a rotary actuator can be mechanically regulated (damped) only at the innermost or outermost circumferencial part. As already described, a plurality of the reference tracks for positioning can exist in the radial direction of a recording medium. When a plurality of reference tracks exist on the recording medium, although the servo track pattern is generally rewritten by avoiding the reference track, the reference track can be also changed from the positional relation with a defect.

In the embodiment, formatting of an information track by using the reference track for positioning as a starting point is executed by a signal sent via an interface circuit of the magnetic recording apparatus. It can be executed either at the stage of shipping from a factory or at a stage where a defect occurs in an arbitrary address position in the medium as a result of employment of the magnetic recording apparatus by the user since the formatting in the apparatus of the invention can be executed in a state where the casing of the apparatus is closed. The conventional apparatuses do not have this function. The function is created by the present invention.

A function of detecting the position of a defect in a medium and executing a registering process in connection with the formatting process is provided. The function is important in order to assure the reliability similar to that of a conventional apparatus. In order to execute the function, it is efficient to execute the formatting through a magnetic disk controller and this arrangement is employed in the embodiment. In order to realize it, a sequence of the execution of the formatting is preliminarily programmed in the magnetic disk controller.

A function of arbitrary changing the format pitch to format the information track by avoiding a defect is also provided. This can be realized by varying the track pitch feed amount at any time.

According to the above method, the servo patterns can be formed on the whole face of a magnetic recording medium and the formatting process for the whole face of a medium by the servo track writer is made unnecessary. Consequently, the throughput of the apparatus limited by the servo track writer can be increased more than ten times and the price of the magnetic recording apparatus can be accordingly reduced by about 10%.

The magnetic head can be accurately positioned by the realization of highly precise servo patterns having a small amount of noise signals and the high density magnetic storage can be obtained.

## Claims

1. A magnetic recording apparatus comprising at least a magnetic head and a positioning system for the magnetic head, which has a circuit for separately detecting a positive pulse amplitude and a negative pulse amplitude of a reproduction signal in an electric circuit of the magnetic recording apparatus, calculates an off-track value of the magnetic head by executing an arithmetic operation on the basis of the two kinds of amplitude values, and generates a positioning signal.

2. A magnetic recording apparatus comprising at least a magnetic head and a positioning system for the magnetic head, which has two peak hold circuits for separately processing a positive pulse amplitude and a negative pulse amplitude included in a reproduction signal from the magnetic head and a computer unit for detecting an off-track value on the basis of outputs from the two peak hold circuits, and generates a positioning signal.

3. The apparatus of claim 2, wherein said computing unit is constructed by a subtracter, or by a divider, or by a subtracter, an adder and a divider.

4. The apparatus of claim 2, wherein a signal amplifier is provided in parallel to said computing unit and said amplifier changes the amplification factors of the positive pulse amplitude and the negative pulse amplitude in proportion to output values from the computing unit, respectively.

5. The apparatus of claim 2, wherein an input signal to said amplifier is a reproduction signal from the magnetic head and a circuit for executing a decoding process is provided at the post stage.

6. A magnetic recording apparatus comprising at least a magnetic head and a positioning system for said magnetic head, wherein an electric circuit in the magnetic recording apparatus has three circuits for a process for writing information on the basis of information obtained by multiplexing servo information on recording information to a recording medium, a process for reproducing said written information, and a process for calculating an off-track value of the magnetic head from said reproduced signal and generating a positioning signal.

7. The apparatus of claim 6, wherein said reproduction processing circuit extracts a servo signal from the reproduced signal by using a frequency filter, calculates the position information from a difference, a sum, or a ratio of a positive pulse amplitude and a negative pulse amplitude of said servo signal, and generates a positioning signal.

8. The apparatus of claim 7, wherein frequencies of servo signals extracted from said reproduction signals are different in neighbouring information tracks.

9. The apparatus of claim 8, wherein a band-pass filter is used to extract the servo signal from said reproduced signal.

10. The apparatus of claim 8 or 9, wherein the difference between the frequencies of the servo signals from said neighbouring information tracks is wider than the band width of said band-pass filter.

11. The apparatus of claim 9, wherein the centre frequency of said band-pass filter is made variable.

12. A magnetic recording apparatus comprising at least a magnetic head and a positioning system for said magnetic head, which has a circuit for separately detecting a positive pulse amplitude and a negative pulse amplitude of a servo signal extracted based on a reproduction signal from existing tracks on the same face, calculates an off-track value of the magnetic head by executing an arithmetic operation on the basis of the two kinds of amplitude values, and self-generates a new servo pattern in a state where the magnetic head is positioned based on the off-track value.

13. The apparatus of claim 1 or 12, wherein when the off-track value is calculated from a value obtained from a difference, a ratio, or a ratio of a difference and a sum of the positive and negative pulse amplitudes of the reproduction signal, the following relation is satisfied

$$Ph \propto Vp\text{-}Vm, \; Ph \propto Vp/Vm, \; \text{or} \; Ph \propto (Vp\text{-}Vm)/(Vp\text{+}Vm)$$

where the positive pulse amplitude of the reproduction signal is Vp, the negative pulse amplitude is Vm, and the off-track value of the magnetic head is Ph.

14. The apparatus of claim 12, wherein a reproduction track centre is apart from a write track centre by the half of a write track width or more with respect to the positional relation between a functional element constructing the means for reproducing said servo signal and a functional element constructing the means for recording the servo signal.

15. The apparatus of claim 12, further comprising two peak hold circuits for processing the positive pulse amplitude and the negative pulse amplitude included in the reproduction signal from the magnetic head, respectively, and a computing unit for executing an arithmetic operation of subtraction, addition, or division, or a combination of them on the basis of outputs from the two peak hold circuits.

16. The apparatus of claim 12, wherein at least one reference track for positioning is provided on the recording medium face.

17. The apparatus of claim 12, wherein a plurality of said reference tracks for positioning exist in the radial direction of the recording medium.

18. The apparatus of claim 12, having the function of formatting an information track by using said reference track for positioning as a starting point by a signal sent via an interface circuit interposed between the magnetic head and an external information processor.

19. The apparatus of claim 12, having the function of executing a process for detecting and registering the position of a defect in the medium interlockingly with said formatting process.

20. The apparatus of claim 12, having the function of arbitrary changing said track pitch.

21. The apparatus of any preceding claim, wherein a giant magnetoresistive element, or a tunnelling magnetoresistive element, or a dual magnetoresistive element constructed by at least two functional films is used as means for reproducing said magnetic head.

22. The apparatus of any preceding claim, wherein the centre of the width of a servo pattern and the centre of the width of a data pattern are positioned on tracks on the same circumference.

23. The apparatus of any preceding claim, wherein the fluctuation of the centre position of the servo pattern existing in the same information track is within 10% of a track pitch.

24. The apparatus of any preceding claim, further comprising at least one information track in which the ratio of a data zone is 95% or higher.

# FIG. 1

# FIG. 2

# FIG. 3

OFFSET DISTANCE OF REPRODUCING PART ( $\mu$m )

# FIG. 4

OFF-TRACK POSITION

# FIG. 5a

# FIG. 5b

# FIG. 5c

# FIG. 5d

# FIG. 5e

## FIG. 6

## FIG. 7

# FIG. 8

GRAY CODE ZONE

43-2 ZONE

43-4 ZONE

43-1 ZONE

43-3 ZONE

# FIG. 9a

46-1 POSITIVE PULSE AMPLITUDE

46-3 POSITIVE PULSE AMPLITUDE

46-1 NEGATIVE PULSE AMPLITUDE

46-3 NEGATIVE PULSE AMPLITUDE

# FIG. 9b

46-1 POSITIVE PULSE AMPLITUDE

46-3 POSITIVE PULSE AMPLITUDE

46-1 NEGATIVE PULSE AMPLITUDE

46-3 NEGATIVE PULSE AMPLITUDE

## FIG. 10

## FIG. 11

## FIG. 12a

## FIG. 12b

## FIG. 12c

# FIG. 13a

# FIG. 13b

10 MOTOR